# EUROPEAN PATENT APPLICATION

(11) **EP 4 443 557 A1**
(43) Date of publication of application: **09.10.2024**
(21) Application number: 23793214.0
(22) Date of filing: 08.09.2023
(51) Int. Cl.: H01M 4/38

(54) **NEGATIVE ELECTRODE MATERIAL, PREPARATION METHOD THEREFOR AND LITHIUM-ION BATTERY**

(30) Priority: 26.12.2022 CN 202211679854
(71) Applicant: BTR NEW MATERIAL GROUP CO., LTD., Shenzhen, Guangdong 518106 (CN)
(72) Inventor: LIU, Zhangkun, Shenzhen, Guangdong 518016 (CN); HE, Peng, Shenzhen, Guangdong 518016 (CN); XIAO, Chengmao, Shenzhen, Guangdong 518016 (CN); REN, Jianguo, Shenzhen, Guangdong 518016 (CN); HE, Xueqin, Shenzhen, Guangdong 518016 (CN)
(74) Representative: Müller Schupfner & Partner Patent- und Rechtsanwaltspartnerschaft mbB (Muc)
(86) International application number: PCT/CN2023/117767
(87) International publication number: WO 2024/139392

(57) **Abstract**

The present disclosure relates to an anode material, a preparation method thereof and a lithium-ion battery. The anode material comprises a carbon material. The carbon material comprises a carbon shell layer. A cavity is located inside the carbon material. The carbon shell layer encloses to form the cavity. The carbon shell layer has pores, and at least part of the pores runs through the carbon shell layer. In the anode material of the present disclosure, the carbon material possesses a cavity arranged inside it and pores in the carbon shell layer, so that the anode material can reserve enough space to withstand the expansion stress due to lithium intercalation, thereby improving the anti-expansion performance and cycle performance of the anode material.

## Description

The present application claims the benefit of priority of Chinese patent application No. 202211679854.8 filed with the China Patent Office on December 26, 2022, entitled "ANODE MATERIAL, METHOD FOR PREPARING THE SAME, AND LITHIUM-ION BATTERY", the content of which is hereby incorporated by reference in its entirety.

### TECHNICAL FIELD

The present disclosure relates to the technical field of anode materials, in particular to an anode material, a method for preparing the anode material, and a lithium-ion battery.

### BACKGROUND

The porous carbon as an anode material is one of the most important materials for improving the cyclic expansion performance of lithium-ion batteries. At present, the commonly used porous carbon as an anode material loads lithium and inhibits the volumetric expansion caused thereby thorough its large cavity or pores inside. The porous carbon materials are generally synthesized by simple high temperature carbonization. However, the porous structure directly formed by high temperature carbonization has discontinuous graphite lattice structure, which may reduce the mechanical properties of the carbon material itself and the Van der Waals force causing π -π stacking of graphite between the carbon material particles, and ultimately results in the inability of pores and spaces between the particles being to withstand the expansion stress due to lithium intercalation. Therefore, it is necessary to add additional binder to the anode material, which however may reduce the energy density of the porous carbon as an anode material to some extent. Meanwhile, thick pore walls are often needed for the porous carbon as an anode material to provide sufficient mechanical strength, which however may reduce the utilization efficiency of carbon and is not conducive to capacity improvement.

Therefore, an anode material with high capacity and low expansion is urgently needed.

### SUMMARY

The present disclosure provides an anode material, a method for preparing the anode material, and a lithium-ion battery. The anode material provided by the present disclosure can increase the utilization efficiency of carbon in the material, and further improve the capacity and cyclic capability of the material, and also has excellent anti-expansion performance.

In order to achieve above objects, a first technical solution of the present disclosure is as follows. Embodiments of the present disclosure provide an anode material. The anode material includes a carbon material, the carbon material includes a carbon shell layer. A cavity is located inside the carbon material, and the carbon shell layer encloses to form the cavity, and the carbon shell layer has pores, and at least part of the pores runs through the carbon shell layer.

A second technical solution of the present disclosure is as follows. Embodiments of the present disclosure provide a method for preparing an anode material. The method includes following steps:
performing a first heat treatment to a mixture containing a silicon oxide raw material loaded with metal catalyst particles and a carbon source, catalyzing the carbon source to graphitize, and obtaining a first precursor;
etching the first precursor to obtain a second precursor, wherein the etching agent for the etching is oxidizing acid; and
reducing at least part of the silicon oxide raw material in the second precursor to a silicon material to obtain the anode material.

A third technical solution of the present disclosure is as follows. Embodiments of the present disclosure provide a lithium-ion battery. The lithium-ion battery includes the anode material as described in the first aspect or the anode material prepared by the method as described in the second aspect.

The technical solutions of the present disclosure include at least the following beneficial effects.

In the anode material of the present disclosure, the carbon material has a cavity arranged inside the carbon shell layer and pores located in the carbon shell layer, and the presence of the cavity and the pores enable the carbon material to become a porous and hollow shell, which can reserve enough space for the filled silicon material to expand. When the silicon material expands and extrudes the carbon material, the carbon material discharges the internal gas or electrolyte through the pores in the carbon shell layer to form deformation which can withstand the expansion stress due to lithium intercalation. When the silicon material shrinks after lithium de-intercalation, the deformed carbon material absorbs gas or electrolyte through the pores in the carbon shell layer and recovers its morphology, so that the anti-expansion performance and cycle performance of the anode material are improved.

The present disclosure performs a first heat treatment to the mixture containing the silicon oxide raw material loaded with metal catalyst particles and the carbon source, so that the carbon source is graphitized and cracked to generate carbon atoms during the first heat treatment process. One part of the generated carbon atoms can be dissolved in the interior of the catalyst metal particles, and deposited on the surface of the catalyst upon saturation, the deposited carbon atoms grow into a carbon shell layer. The other part of the generated carbon atoms can grow along the metal particle surface to form carbon shell layer under the catalytic action of the catalyst metal particles, so that a structure in which the catalyst metal particles is encapsulated in the carbon shell layer is formed. The poor catalytic ability of the silicon oxide raw material to the carbon source material leads to the distribution of the silicon oxide raw material outside the carbon shell layer and among the metal particles encapsulated in the carbon shell layer, thus obtaining the first precursor. Subsequently, the first precursor is etched so that the catalyst metal particles inside the carbon shell layer are etched off to form a cavity. Meanwhile, the oxidizing acid used during the etching process can undergo a redox reaction with the defect of the carbon shell layer by forming C-O, C = O, C-N and C-S bonds and pores, and, a porous carbon material with cavity inside (namely the second precursor) is formed. Finally, at least part of the silicon oxide raw material in the second precursor is reduced to silicon material to obtain the anode material. The method of the present disclosure improves the anti-expansion performance of the material by firstly catalyzing the carbon source with the metal catalyst particles to allow a shell structure to be grown under the condition of the first heat treatment, and secondly performing etching to form a cavity inside the carbon shell layer and pores in the carbon shell layer. Finally, the method of the present disclosure reduces the silicon oxide raw material to silicon material directly without etching the silicon oxide raw material, thereby decreasing the waste of the silicon oxide raw material, and improving the capacity of the anode material.

### BRIEF DESCRIPTION OF DRAWINGS

The present disclosure will be further described with reference to accompanying drawings and examples.
FIG. 1 is a structural schematic diagram of the anode material of the present disclosure;
FIG. 2 is a sectional view of the carbon material;
FIG. 3 is a flow chart of preparation of the anode material of the present disclosure;
FIG. 4 is a diagram of a preparation process of the first precursor obtained by performing a first heat treatment to a mixture containing the silicon oxide raw material loaded with metal catalyst particles;
FIG. 5 is a diagram of a first preparation process of the silicon oxide raw material loaded with metal catalyst particles;
FIG. 6 is a diagram of a second preparation process of the silicon oxide raw material loaded with metal catalyst particles;
FIG. 7 is a diagram of a preparation process of the second precursor obtained by etching the first precursor;
FIG. 8 is a diagram of a preparation process of the anode material obtained by mixing the second precursor and a reducing agent before performing a third heat treatment; and
FIG. 9 is a schematic diagram of a simulated structure of the anode material of the present disclosure.

In the drawings:
10-anode material;
1- carbon material;
11- cavity;
12- carbon shell layer;
13- pore;
14- graphitized carbon material;
2- silicon material.

### DESCRIPTION OF EMBODIMENTS

In order to better understand technical solutions of the present disclosure, the embodiments of the present disclosure are described in details with reference to the drawings.

It should be clear that the described embodiments are merely part of the embodiments of the present disclosure rather than all of the embodiments. All other embodiments obtained by those skilled in the art without paying creative labor shall fall into the protection scope of the present disclosure.

The terms used in the embodiments of the present disclosure are merely for the purpose of describing specific embodiment, rather than limiting the present disclosure. The terms "a", "an", "the" and "said" in a singular form in the embodiment of the present disclosure and the attached claims are also intended to include plural forms thereof, unless noted otherwise.

It should be understood that the term "and/or" used in the context of the present disclosure is to describe a correlation relation of related objects, indicating that there may be three relations, e.g., A and/or B may indicate only A, both A and B, and only B. In addition, the symbol "/" in the context generally indicates that the relation between the objects in front and at the back of "/" is an "or" relationship.

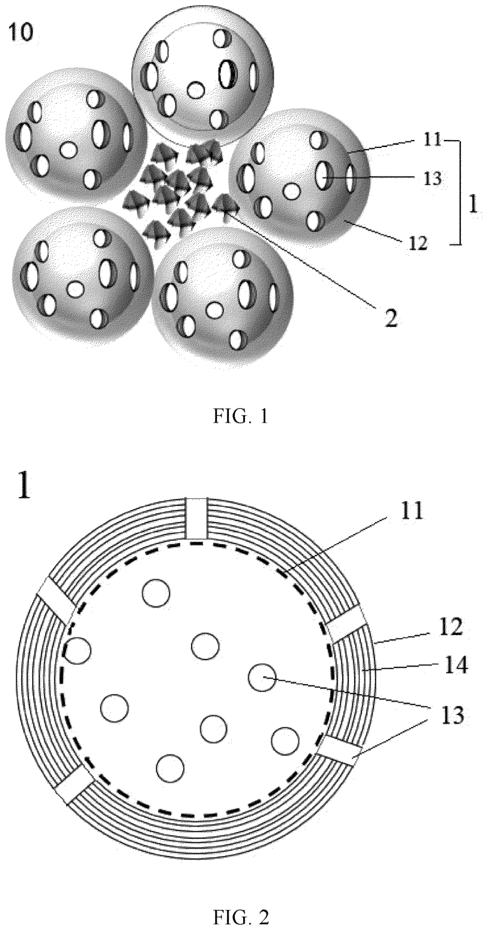

The present disclosure provides an anode material 10, as shown in figure 1, the anode material 10 includes a carbon material, 1 the carbon material 1 includes a carbon shell layer 12. A cavity 11 is provided inside the carbon material 1, and the carbon shell layer 12 encloses to form the cavity 1, and the carbon shell layer 12 has pores 13, and at least part of the pores 13 runs through the carbon shell layer 12.

As can be seen from the solution above, in the anode material 10 of the present disclosure, the carbon material 1 has a cavity 11 arranged inside the carbon shell layer 12 and pores 13 located in the carbon shell layer 12, and the presence of the cavity 11 and the pores 13 enable the carbon material 1 to become a porous and hollow shell, which can reserve enough space for the filled silicon material to expand. When the silicon material expands and extrudes the carbon material 1, the carbon material 1 discharges the internal gas or electrolyte through the pores 13 in the carbon shell layer 12 to form deformation which can withstand the expansion stress due to lithium intercalation. When the silicon material shrinks after lithium de-intercalation, the deformed carbon material 1 absorbs gas or electrolyte through the pores 13 in the carbon shell layer 12 and recovers its morphology, so that the morphology recovery of the carbon material enables the anode material 10 to reserve enough space to withstand the expansion stress due to lithium intercalation, thereby improving the anti-expansion performance and cycle performance of the anode material.

Further, the anode material 10 includes a silicon material 2, the silicon material 2 is distributed in the carbon material 1. The carbon material 1 provides enough space for the expansion of the filled silicon material 2, and the filled silicon material 2 can improve the utilization space of the anode material 10 and the capacity of the anode material 10.

Preferably, at least part of the silicon material 2 is distributed in the carbon shell layer 12.

As shown in FIG. 2, in an embodiment, the carbon material 1 is spherical, and the carbon shell layer 12 includes a graphitized carbon material 14 which has a layered structure configured to be stacked along the radial direction of the carbon material 1, so that the carbon shell layer 12 has excellent elastic modulus and tensile strength, which is helpful for the carbon shell layer 12 to remain unbroken and shrink to recover its morphology when it is deformed.

A structural schematic diagram of the carbon material 1 can be refer to FIG. 2. The stacking direction of the layered structure of graphitized carbon material 14 extends along the radial direction of the carbon material 1, in other words, the length direction of the layered structure of the graphitized carbon material 14 is kept to be perpendicular to the radial direction of the carbon material 1, and the thickness direction (i.e. the stacking direction) of the graphitized carbon material 14 is kept to be perpendicular to the extending direction of the carbon shell layer 12, and is consistent with the radial direction of the carbon material 1.

The graphitized carbon material includes at least one of graphite and graphene. Preferably, the graphitized carbon material is graphene, and the number of layers in the layered structure of graphene is < 20, specifically, it can be 1 layer, 2 layers, 3 layers, 5 layers, 8 layers, 10 layers, 12 layers, 15 layers, 18 layers or 19 layers, etc. Of course, it can also be other values within the above range, which are not limited here.

In an embodiment, the graphitized carbon material is graphite formed by stacking multiple layers of graphene, and the number of layers of layered structure in the graphite is ≥20, specifically, it can be 20 layers, 30 layers, 50 layers, 80 layers, 100 layers, 120 layers, 150 layers, 180 layers or 200 layers, etc. Of course, it can also be other values within the above range, which are not limited here.

In some embodiments, the silicon material is partially located in the hollow inner shell 11 and/or the pore 13, which can improve the capacity of the anode material 10.

In some embodiments, the layered graphite is arranged between the carbon materials 1 (the layered graphite is not shown in the drawings), and the presence of the layered structure of graphite can strengthen the conductive network of the anode material 10, thereby improving the conductivity of the anode material 10.

In some embodiments, the median particle size of the carbon material 1 is 5nm to 200nm. Specifically, the median particle size of the carbon material 1 can be, for example, 5 nm, 10nm, 20nm, 50nm, 80nm, 100nm, 120nm, 150nm, 180nm and 200nm, etc. Of course, it can also be other values within the above range, which are not limited here.

In some embodiments, the thickness of the carbon shell layer 12 is 1.2 nm to 5.2 nm. Specifically, the thickness of the carbon shell layer 12 can be, for example, 1.2 nm, 1.5 nm, 2 nm, 2.5 nm, 3 nm, 3.5 nm, 4 nm, 5 nm and 5.2 nm, etc. Of course, it can also be other values within the above range, which are not limited here.

In the present disclosure, the thickness of the carbon shell layer 12 is 1.2 nm to 5.2 nm, and the graphitized carbon material 14 has a layered structure, indicating that the carbon shell layer 12 of the present disclosure has certain rigidity and certain elasticity, and can resist the volumetric expansion due to lithium intercalation of the material.

In some embodiments, Raman spectrogram of the anode material obtained by Raman spectroscopy using a measuring light source with a wavelength of 532nm shows that, a D band is observed between 1300cm⁻¹ and 1400 cm ⁻¹ and a G band is observed between 1500 cm ⁻¹ and 1600 cm ⁻¹, and the ratio I_{G}/I_{D} between the peak intensity I_{D} of the D band and the peak intensity I_{G} of the G band is greater than 0.5. Specifically, I_{G}/I_{D} can be 0.6, 0.7, 0.8 and 0.9, etc. Of course, it can also be other values within the above range, which are not limited here. If the I_{G}/I_{D} falls within the range defined above, the anode material of the present disclosure may possess high graphitization degree, so that a strong π-π stacking van der Waals force exists among the carbon materials 1. This structure of the anode material can resist the expansion stress due to lithium intercalation, thereby achieving the ability of lithium intercalation in the pores of the carbon material 1 and improving the utilization efficiency of carbon.

In some embodiments, the average inner diameter of the cavity 11 is 3.8nm to 198.8nm. Specifically, the average inner diameter of the cavity 11 can be, for example, 3.8 nm, 10nm, 30nm, 50nm, 80nm, 100 nm, 120 nm, 150 nm, 180 nm and 198.8nm, etc. Of course, it can also be other values within the above range, which are not limited here. It can be understood that the carbon material 1 is spherical and the cavity 11 is spherical too, and the average inner diameter of the cavity 11 refers to an average diameter of an inner circle in the spherical cavity 11.

In some embodiments, the average pore diameter of the pore 13 is 0.42nm to 2 nm. Specifically, the average pore diameter of the pore 13 can be 0.42 nm, 0.5 nm, 1 nm, 1.5 nm, 1.8 nm and 2 nm, etc. Of course, it can also be other values within the above range, which are not limited here.

In some embodiments, a distance between adjacent carbon materials 1 is 0nm to 40 nm. Specifically, the distance between adjacent carbon materials 1 can be, for example, 0.34nm, 1 nm, 5 nm, 10 nm, 20 nm, 30 nm and 40 nm, etc. Of course, it can also be other values within the above range, which are not limited here. In the anode material 10 of the present disclosure, the distance between adjacent carbon materials 1 is relatively short, which is beneficial to reduce the formation of bulk lithium in the process of lithium intercalation and the leakage of silicon material 2 in the process of lithium de-intercalation. It can be understood that the distance between some adjacent carbon materials 1 can be 0 nm.

In some embodiments, the degree of sphericity of the carbon material 1 is 0.6 to 1.0. Specifically, the degree of sphericity of the carbon material 1 can be 0.6, 0.7, 0.8, 0.9 and 1.0, etc. Of course, it can also be other values within the above range, which are not limited here. The carbon material 1 of the present disclosure has a high degree of sphericity, which is beneficial to improve the processing ability of the material.

In some embodiments, a mass ratio of the silicon material 2 to the anode material 10 is 5% to 80%. Specifically, the mass ratio of the silicon material 2 to the anode material 10 can be, for example, 5%, 10%, 20%, 30%, 40%, 50%, 60%, 70% and 80%. Of course, it can also be other values within the above range, which are not limited here.

In some embodiments, the median particle size of the silicon material 2 is 1 nm to 15 nm. For example, the median particle size of the silicon material 2 can be 1 nm, 3 nm, 5 nm, 8 nm, 10 nm, 12 nm, 14 nm and 15 nm, etc. Of course, it can also be other values within the above range, which are not limited here.

In some embodiments, the silicon material 2 includes at least one of crystalline silicon and amorphous silicon.

In some embodiments, the elastic modulus of the carbon material 1 is 0.1 TPa to 0.8 TPa. Specifically, the elastic modulus of the carbon material 1 can be, for example, 0.1TPa, 0.2 TPa, 0.3 TPa, 0.4 TPa, 0.5 TPa, 0.6 TPa, 0.7 TPa and 0.8 TPa, etc. Of course, it can also be other values within the above range, which are not limited here. If the elastic modulus of the carbon material 1 is smaller than 0.1TPa, the carbon material 1 is easy to collapse. If the elastic modulus of the carbon material 1 is greater than 0.8Tpa, the rigidity of the carbon material 1 increases, so that it is difficult to provide space for lithium intercalation expansion.

In some embodiments, the tensile strength of the carbon material 1 is 15 GPa to 110 GPa. Specifically, the tensile strength of the carbon material 1 can be, for example, 15 GPa, 30 GPa, 50 GPa, 60 GPa, 80 GPa, 100 GPa and 110 GPa, etc. Of course, it can also be other values within the above range, which are not limited here. When the tensile strength of the carbon material 1 is within the above range, the carbon material 1 of the present disclosure has excellent mechanical properties, the reasons are as follows: the carbon material 1 of the present disclosure has a relatively thin shell thickness, the graphitization degree thereof is high, and the distance between the carbon materials 1 is short to have a strong π-π stacking van der Waals force of the carbon material 1, so that gap structures among the carbon materials 1 has good stability which can resist the expansion stress due to lithium intercalation, thereby achieving the ability of lithium intercalation among the particles and improving the utilization efficiency of carbon. If the tensile strength of the carbon material 1 is smaller than 15 GPa, the carbon material is easy to be broken during lithium intercalation expansion. If the tensile strength of the carbon material 1 is greater than 110 GPa, it is difficult to provide space for lithium intercalation expansion.

In some embodiments, the porosity of the carbon material 1 is 65% to 96%. Specifically, the porosity of the carbon material 1 can be, for example, 65%, 70%, 75%, 80%, 85%, 90% and 96% etc. Of course, it can also be other values within the above range, which are not limited here. It can be understood that the porosity of the carbon material 1 refers to the volume proportion of the cavity 11 and the pore 13 in the carbon material 1.

In some embodiments, the porosity of the anode material 10 is 7% to 50%. Specifically, the porosity of the anode material 10 can be, for example, 7%, 10%, 15%, 20%, 30%, 40% and 50%, etc. Of course, it can also be other values within the above range, which are not limited here. It can be understood that the porosity of the anode material 10 refers to the volume proportion of the cavity 11, the pore 13 and the space between the carbon materials 1 in the anode material 10. The porosity of the anode material 10 in the present disclosure is large, so that the anode material 10 has excellent anti-expansion ability.

In some embodiments, the *π* -*π* stacking van der Waals force between adjacent carbon materials 1 is 1 kJ/mol to 50 kJ/mol. Specifically, the *π* -*π* stacking van der Waals force between adjacent carbon materials 1 is 1 kJ/mol, 5 kJ/mol, 10 kJ/mol, 20 kJ/mol, 30 kJ/mol, 40 kJ/mol and 50 kJ/mol, etc. Of course, it can also be other values within the above range, which are not limited here. The strong π-π stacking van der Waals force between the carbon materials 1 of the present disclosure enables the spaces between the carbon materials 1 to withstand the expansion stress due to lithium intercalation, and the energy density of the anode material 10 can be improved without additional binders.

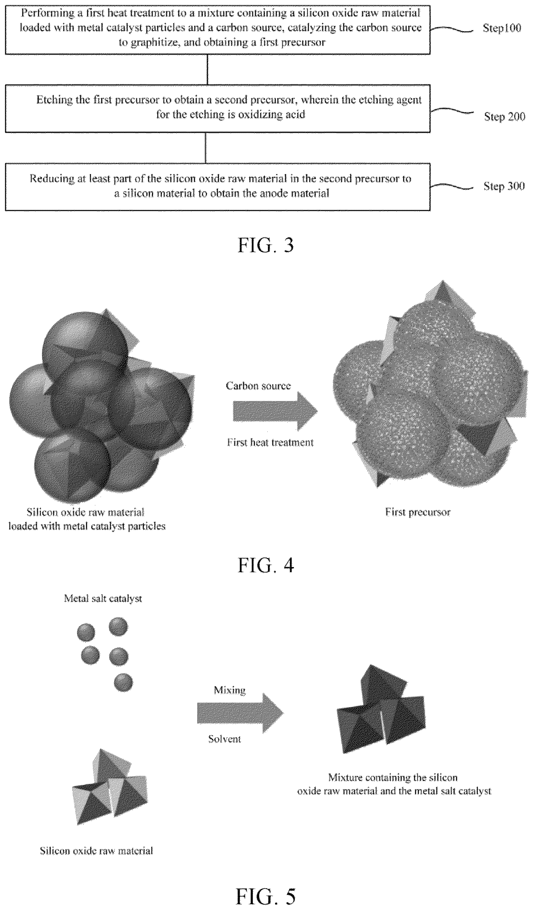

The present disclosure provides a method for preparing the above anode material, FIG. 3 shows a flow chart of a method for preparing the anode material of the present disclosure. The method includes following steps.

A first heat treatment is performed to a mixture containing a silicon oxide raw material loaded with metal catalyst particles and a carbon source, the carbon source is catalyzed to graphitize, and a first precursor is obtained.

The first precursor is etched to obtain a second precursor. The etching agent for the etching is an oxidizing acid.

At least part of the silicon oxide raw material in the second precursor is reduced to a silicon material to obtain the anode material 10.

In the above solution, the present disclosure performs a first heat treatment to the mixture containing the silicon oxide raw material loaded with metal catalyst particles and the carbon source, so that the carbon source is graphitized and cracked to generate carbon atoms during the first heat treatment process. One part of the generated carbon atoms can be dissolved in the interior of the catalyst metal particles, and deposited on the surface of the catalyst upon saturation, the deposited carbon atoms grow into a carbon shell layer 12. The other part of the generated carbon atoms can grow along the metal particle surface to form carbon shell layer 12 under the catalytic action of the catalyst metal particles, so that a structure in which the catalyst metal particles is encapsulated in the carbon shell layer 12 is formed. The poor catalytic ability of the silicon oxide raw material to the carbon source material leads to the distribution of the silicon oxide raw material outside the carbon shell layer 12 and among the metal particles encapsulated in the carbon shell layer 12, thus obtaining the first precursor. Subsequently, the first precursor is etched so that the catalyst metal particles inside the carbon shell layer 12 are etched off to form the cavity 11. Meanwhile, the oxidizing acid used during the etching process can undergo a redox reaction with the defect of the carbon shell layer 12 to gradually peel off carbon atoms, and pores 13 are formed, C-O, C = O, C-N and C-S bonds are formed at edges of pores upon termination of redox reaction, and, a porous carbon material 1 with the cavity 11 inside (namely the second precursor) is formed. Finally, at least part of the silicon oxide raw material in the second precursor is reduced to silicon material to obtain the anode material 10. The method of the present disclosure improves the anti-expansion performance of the material by firstly catalyzing the carbon source with the metal catalyst particles to allow a shell structure to be grown under the condition of the first heat treatment, in which the shell structure has a large pore volume and lithium intercalation ability, and secondly performing etching to form a cavity 11 inside the carbon shell layer 12 and pores 13 in the carbon shell layer 12. Finally, the method of the present disclosure reduces the silicon oxide raw material to silicon material 2 directly without etching the silicon oxide raw material, thereby decreasing the waste of the silicon oxide raw material, and improving the capacity of the anode material 10.

The preparation method of the present disclosure is specifically described in the following embodiments.

Step S100: as shown in FIG. 4, a first heat treatment is performed to a mixture containing a silicon oxide raw material loaded with metal catalyst particles and a carbon source so as to catalyze the carbon source to graphitize, and then a first precursor is obtained. In some embodiments, the carbon source includes a gas-phase carbon source and a solid-phase carbon source.

In some embodiments, the gas-phase carbon source includes at least one of methane, ethane and acetylene.

In some embodiments, the solid-phase carbon source includes at least one of asphalt, glucose, sucrose, cellulose, glycine, alanine and phenylalanine. When the solid-phase carbon source is used for the first heat treatment, a layered graphite structure is formed between the carbon materials as the solid carbon source has poor uniformity compared with that of the gas-phase carbon source, which leads to excessive local carbon source. The presence of the layered structure of graphite can strengthen the conductive network of the anode material 10, thereby improving the conductivity of the anode material 10.

In some embodiments, a mass ratio of the solid-phase carbon source to the metal catalyst particles is 1: (10-10000). Specifically, the mass ratio of the solid-phase carbon source to the metal catalyst particles can be 1: 10, 1: 50, 1: 100, 1: 500, 1: 1000, 1: 5000 and 1: 10000. Of course, it can also be other values within the above range, which are not limited here. By defining the mass ratio of the solid-phase carbon source to the metal catalyst particles within the above range, large amount of metal catalyst particles may be added, which is benefit for the carbon source to the form a thin shell structure on the surface of the metal catalyst particles. If the mass ratio of the solid-phase carbon source to the metal catalyst particles is greater than 1: 10, too much amorphous carbon may be formed, which is not helpful to the improvement of the properties of the material. If the mass ratio of the solid-phase carbon source to the metal catalyst particles is smaller than 1: 10000, additive amount of carbon source is too small, so that carbon source cannot completely coat the metal catalyst particles.

In some embodiments, the inlet flow rate of the gas-phase carbon source is 10 sccm to 250 sccm. Specifically, the inlet flow rate of the gas-phase carbon source is 10 sccm, 30 sccm, 50 sccm, 100 sccm, 150 sccm, 200 sccm and 250 sccm, etc. Of course, it can also be other values within the above range, which are not limited here. It can be understood that increasing the inlet flow rate of gas-phase carbon source will increase the thickness of the carbon shell layer 12, resulting in an increase in the tensile strength and elastic modulus of the carbon shell layer 12. If the inlet flow rate is greater than 250sccm, a rapid growth of the carbon shell layer 12 may occur, which in turn leads to more defects in the carbon shell layer and finally leads to a decrease in both tensile modulus and elastic modulus.

In some embodiments, the temperature for the first heat treatment is 600°C to 1000°C. Specifically, the temperature for the first heat treatment can be, for example, 600 ° C, 650°C, 700°C, 750°C, 800°C, 850°C, 900°C, 950°C, and 1000°C, etc. Of course, it can also be other values within the above range, which are not limited here.

In some embodiments, the heat-preserved time of the first heat treatment is 1min to 30min. Specifically, the heat-preserved time of the first heat treatment can be, for example, 1 min, 5 min, 10 min, 20 min and 30 min, etc. Of course, it can also be other values within the above range, which are not limited here.

In some embodiments, hydrogen is fed during the first heat treatment, and the inlet flow rate of hydrogen is 10 sccm to 290 sccm. For example, the inlet flow rate of hydrogen can be 10 sccm, 30 sccm, 50 sccm, 80 sccm, 90sccm, 150 sccm, 200 sccm, 250 sccm and 290 sccm, etc. Of course, it can also be other values within the above range, which are not limited here. By controlling the inlet flow rate of hydrogen within the above range, the cracking of the carbon source is slowed down, the concentration of cracked carbon atoms is reduced, and the speed for forming the carbon shell by carbon atoms is slowed down, and accordingly the content of defect sites is reduced, thus the I_{D}/I_{G} of the anode material is controlled to be greater than 0.5.

In some embodiments, the silicon oxide raw material loaded with metal catalyst particles is prepared by a method including the following steps:
Performing a second heat treatment to a mixture containing the silicon oxide raw material and a metal salt catalyst under a reducing atmosphere to obtain the silicon oxide raw material loaded with metal catalyst particles. Specifically, as shown in FIG. 5, the mixture containing the silicon oxide raw material and metal salt catalyst is prepared by a method including the following steps:
mixing a solvent, the silicon oxide raw material and the metal salt catalyst to obtain a mixture, and the mixture is dried and ground to obtain the silicon oxide raw material loaded with metal catalyst particles. It can be understood that material obtained after drying is a block solid which needs to be ground into powder for later use.

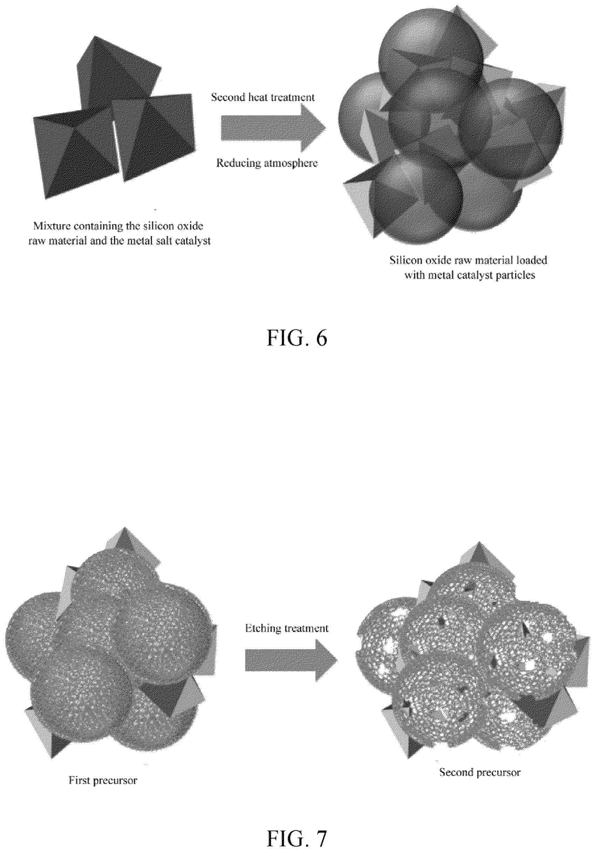

In this step, as shown in FIG. 6, the catalyst metal ions in the mixture containing the silicon oxide raw material and metal salt catalyst are reduced to catalyst metal nanoparticles under a reducing atmosphere. The silicon oxide raw material on the one hand serves as a template agent to provide a loading site for the metal salt catalyst, and on the other hand, serves as a dispersant to limit the fusion of metal nanoparticles during a process of reducing the catalyst metal ions to grow into metal nanoparticles, so that the catalyst metal nanoparticles have a relatively uniform and controllable size. Of course, the silicon oxide raw material loaded with metal catalyst particles can also be obtained by other conventional methods, for example, it can be obtained by directly mixing the metal catalyst particles with the silicon oxide raw material by dry or wet process, which are not limited here. The metal catalyst particles include at least one of iron, cobalt, nickel, copper, gold, iron alloy, cobalt alloy, nickel alloy, copper alloy and gold alloy.

In some embodiments, the silicon oxide raw material includes at least one of silicon dioxide and silicon monoxide.

The median particle size of the silicon oxide raw material is 5nm to 200nm. Specifically, the median particle size of the silicon oxide raw material can be, for example, 5 nm, 10nm, 20nm, 50nm, 80nm, 100nm, 120nm, 150nm, 180nm and 200nm, etc. Of course, it can also be other values within the above range, which are not limited here.

In some embodiments, the metal salt catalyst includes at least one of Fe³⁺, Co²⁺, Ni²⁺, Cu²⁺ and Au³⁺. Exemplary metal salt catalyst includes at least one of Fe(NO₃)₃, FeCl₃, Co(NO3)₂, CoCl₂, Ni(NO₃)₂, NiCl₂, Cu(NO₃)₂, CuCh and HAuCl₄.

In some embodiments, the mass ratio of the silicon oxide raw material to the metal salt catalyst is 1: (0.08 to 5). Specifically, the mass ratios of the silicon oxide raw material to the metal salt catalyst can be: 1: 0.08, 1: 0.1, 1: 0.5, 1: 1, 1: 2, 1: 3, 1: 4 and 1: 5, etc. Of course, it can also be other values within the above range, which are not limited here.

In some embodiments, the solvent includes at least one of methanol, ethanol, propanol and water.

In some embodiments, the addition amount of the solvent is 50-1000 times of the total mass of the silicon oxide raw material and the metal salt catalyst. Specifically, the addition amount of the solvent is 50 times, 100 times, 200 times, 500 times, 700 times, 800 times, 900 times and 1000 times of the total mass of the silicon oxide raw material and the metal salt catalyst, etc. Of course, it can also be other values within the above range, which are not limited here.

In some embodiments, manners for the mixing includes at least one of grinding and ultrasound. For example, the power of ultrasound is 40 W to 50 W, and the power of ultrasound can be 40 W, 42 W, 45 W, 48 W and 50 W, etc. Of course, it can also be other values within the above range, which are not limited here.

The heat-preserved time of ultrasonic is 0.5 h to 5 h, and for example, the heat-preserved time of ultrasonic can be, 0.5h, 1 h, 2 h, 3 h, 4 h, 5h, etc. Of course, it can also be other values within the above range, which are not limited here. By limiting the above parameters within the defined ranges, the silicon oxide raw material and the metal salt catalyst can be fully mixed, which is beneficial to the formation of the silicon oxide raw material uniformly loaded with metal salt catalyst t particles.

In some embodiments, the method of drying includes evaporative drying.

In some embodiments, the reducing atmosphere includes at least one of hydrogen and ammonia.

In some embodiments, the inlet flow rate of the reducing gas atmosphere is 10 sccm to 150 sccm. Specifically, t the inlet flow rate of the reducing gas atmosphere can be, for example, 10 sccm, 30 sccm, 50 sccm, 80 sccm, 100 sccm, 120 sccm and 150 sccm, etc. Of course, it can also be other values within the above range, which are not limited here.

In some embodiments, the temperature for the second heat treatment is 400°C to 1000°C. Specifically, the temperature for the second heat treatment can be, for example, 400°C, 500°C, 600 ° C, 700°C, 800°C, 900°C, and 1000°C, etc. Of course, it can also be other values within the above range, which are not limited here.

In some embodiments, the heat-preserved time of the second heat treatment is 5 min to 30 min. Specifically, the heat-preserved time of the second heat treatment can be, for example, 5 min, 10 min, 15 min, 20 min, 25 min and 30 min. Of course, it can also be other values within the above range, which are not limited here.

In some embodiments, the heating rate of the second heat treatment is 100°C/h to 1200°C/h. Specifically, the heating rate of the second heat treatment is 100°C/h, 300°C/h, 500°C/h, 800°C/h, 1000°C/h and 1200°C/h, etc. Of course, it can also be other values within the above range, which are not limited here.

Step S200: as shown in FIG. 7, the first precursor is etched to obtain a second precursor. The etching agent for the etching is an oxidizing acid. The second precursor includes a carbon material 1. The carbon material 1 includes a carbon shell layer 12 which has a cavity 11 and pores 13, a silicon oxide raw material is filled among the carbon materials 1.

In this step, the first precursor is etched to etch the catalyst metal particles inside the carbon shell layer 12 and form a cavity 11 and a pore 13. Meanwhile, part of the silicon oxide raw material can fill into the cavity 11 and the pore 13 during the etching process.

In some embodiments, the oxidizing acid includes at least one of sulfuric acid, nitric acid and hydrogen peroxide. On the one hand, the oxidizing acid used can etch the catalyst metal particles inside the carbon shell layer 12 and form a cavity 11. On the other hand, the oxidizing acid used can undergo a redox reaction with the defect of the carbon material by forming C-O, C = O, C-N and C-S bonds and pores. For example, with regard to the metal catalyst particles such as iron, cobalt, iron alloy, cobalt alloy and other materials which are difficult to corrode, the mixed acid of sulfuric acid and nitric acid is used as the etchant for the etching, and if necessary, heating treatment can be carried out during the etching to improve the etching effect.

In some embodiments, the concentration of sulfuric acid in the mixed acid is 0.1 mol/L to 4mol/L. Specifically, the concentration of sulfuric acid in the mixed acid is 0.1 mol/L, 0.5 mol/L, 1 mol/L, 2 mol/L, 3 mol/L and 4 mol/L, etc. Of course, it can also be other values within the above range, which are not limited here.

In some embodiments, the concentration of nitric acid in the mixed acid is 0.1mol/L to 4mol/L. Specifically, the concentration of nitric acid in the mixed acid is 0.1 mol/L, 0.5 mol/L, 1 mol/L, 2 mol/L, 3 mol/L and 4 mol/L, etc. Of course, it can also be other values within the above range, which are not limited here.

In some embodiments, the duration for the etching is 2 h-24 h. Specifically, the duration for the etching is 2h, 5 h, 10 h, 12 h, 15 h, 18 h, 20 h and 24h, etc. Of course, it can also be other values within the above range, which are not limited here.

In some embodiments, the material obtained after etching is a solid-liquid mixture, and solid-liquid separation shall be conducted, then a first water-washing and a first drying are performed on the obtained solid to obtain a second precursor. The second precursor includes a carbon material 1, a cavity 11 etched in the shell layer structure of the carbon material 1, and a pore 13 etched in the shell layer structure of the carbon material 1. The structure described above can reserve enough space to withstand the expansion stress due to lithium intercalation, by which the anti-expansion performance of the anode material 10 is improved.

In some embodiments, the solid-liquid separation can be, for example, centrifugation or filtration.

In some embodiments, the times of the first water-washing is greater than or equal to 1 times, and preferably, the times of the first water-washing is 3 to 10 times.

In some embodiments, the temperature for the first drying is 50°C to 80°C. Specifically, the temperature of the first drying can be 50°C, 60°C, 70°C and 80°C, etc. Of course, it can also be other values within the above range, which are not limited here.

In some embodiments, the duration of the first drying is 6 h to 24h. Specifically, the duration of the first drying can be 6 h, 8 h, 10 h, 12 h, 15 h, 18 h, 20 h and 24 h, etc. Of course, it can also be other values within the above range, which are not limited here.

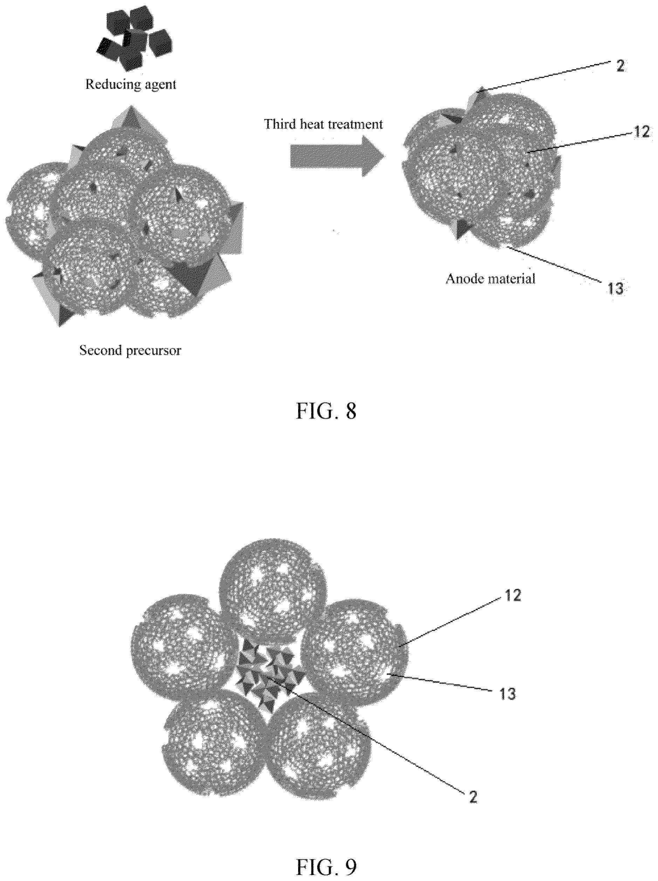

Step S300: reducing at least part of the silicon oxide raw material in the second precursor to silicon material to obtain the anode material 10. Specifically, as shown in FIG. 8, the silicon oxide raw material in the second precursor can be reduced to silicon material 2 by mixing the second precursor with a reducing agent and then conducting a third heat treatment. The simulated structure of the obtained anode material 10 is shown in FIG. 9.

In some embodiment, the reducing agent include at least one of magnesium powder and aluminum powder, and under the reduce action of the reducing agent, the silicon oxide raw material in the second precursor can be reduced to silicon material 2 without etching the silicon oxide raw material, by which the capacity of the anode material 10 is improved, and the waste of the resources is reduced.

In some embodiments, a mass ratio of the second precursor to the reducing agent is (1.25 to 2.00): 1. Specifically, the mass ratio of the second precursor to the reducing agent can be 1.25: 1, 1.50: 1, 1.75: 1 and 2.00: 1, etc. Of course, it can also be other values within the above range, which are not limited here. By limiting the mass ratio of the second precursor to the reducing agent within the above range, the silicon oxide raw material can be reduced to the silicon material 2 as much as possible, which is beneficial to improve the capacity of the anode material 10.

In some embodiments, the third heat treatment is performed in an inert gas atmosphere.

In some embodiments, the inert gas includes at least one of nitrogen and argon.

In some embodiments, the temperature for the third heat treatment is 600°C to 800°C. Specifically, the temperature for the third heat treatment can be 600°C, 630°C, 650°C, 680°C, 700°C, 730°C, 750°C, 780°C, 790°C and 800°C, etc. Of course, it can also be other values within the above range, which are not limited here.

In some embodiments, the heat-preserved time of the third heat treatment is 0.5 h to 5h. Specifically, the heat-preserved time of the third heat treatment can be 0.5 h, 1 h, 2 h, 3 h, 4 h, and 5 h, etc. Of course, it can also be other values within the above range, which are not limited here.

In some embodiments, after the third heat treatment, the method also includes: inerting the material obtained from the third heat treatment to inert the silicon material 2, reduce the oxidation of the silicon material 2, and improve the capacity of the material.

In some embodiments, the gas used for the inerting includes ammonia.

In some embodiments, after the inerting, the method also includes the steps of acid-washing, a second water-washing and a second drying.

In some embodiments, the reagent used for the acid-washing includes hydrochloric acid.

In some embodiments, the duration for the acid-washing is 2 h to 24 h. Specifically, the duration for the acid-washing can be 2 h, 5h, 8h, 10 h, 12 h, 15 h, 18 h and 24 h, etc. Of course, it can also be other values within the above range, which are not limited here.

In some embodiments, the times of the second water-washing is 5 to 10 times.

In some embodiments, a method for conducting the second drying includes freeze drying.

In a third aspect, the resent application provides a lithium-ion battery including the anode material 10 as described above or the anode material 10 prepared by the method as described above.

Those skilled in the art will understand that the preparation methods of the lithium-ion battery described above are only illustrative. Other methods commonly used in the prior art can be adopted without departing from the present disclosure.

The embodiments of the present disclosure will be further described in multiple Examples. The embodiments of the present disclosure are not limited to following Examples. Within the scope of the unchanging main rights, changes can be appropriately implemented.

### Example 1

(1) 1 g of SiO₂, and 2.10 g of Co (NO₃) ₂ 6H₂O were added to 800mL of methanol sequentially to obtain a mixed solution, and then the mixed solution was ultrasonicated for 4 hours under an ultrasonic power of 40W. Subsequently, the mixed solution after ultrasonic treatment was evaporated and dried for 12 hours to obtain a bulk solid. Finally, the bulk solid was ground into powder to obtain a silicon dioxide loaded with catalyst Co²⁺, which was expressed as SiO₂@Co.
(2) The SiO₂@Co powder obtained in step (1) was put into a CVD tube furnace, heated to 800°C at a heating rate of 1200°C/h under an H₂ atmosphere with a flow rate of 90sccm, and then heat-preserved for 20min, so that SiO₂@Co was reduced and a silicon dioxide loaded with cobalt nanoparticles (which was expressed as SiO2-CoNPs Powder) was formed.
(3) The flow rate of H₂ was adjusted to 10sccm under the high temperature condition of 800°C, then methane was fed with a flow rate of 150sccm for 10 minutes before turn off the H₂ and methane. Ar was then fed and the temperature in the furnace was cool down to room temperature to obtain a silicon dioxide loaded with multi-layer graphite encapsulated cobalt nanoparticles, which was expressed as SiO₂-Co@GNPs Powder.
(4) The SiO₂-Co@GNPs Powder was put into a mixed acid solution of 1mol/L sulfuric acid and 1mol/L nitric acid, etched for 8h, centrifuged to obtain a silicon dioxide loaded with porous hollow graphite, which was expressed as SiO₂-MGNPs precipitate. The SiO₂-MGNPs precipitate was washed with water for several times and dried for 8h to obtain SiO₂-MGNPs powder.
(5) The SiO₂-MGNPs Powder was mixed with magnesium powder in a mass ratio of 1.5: 1, and the obtained mixture was placed into a high-temperature tube furnace to perform a high-temperature reduction reaction for 2h in an Ar atmosphere at 650°C, then cooling to room temperature. Afterwards, ammonia was fed for 1 hour before being turned off, then Ar was fed for 0.5 hour before being turned off, and the obtained mixed powder was taken out. Finally, an acid-washing was conducted to the mixed powder for 2 hours with 1mol/L hydrochloric acid, the obtained mixture was then centrifuged, washed with water, and freeze-dried to obtain Si-MGNPs powder.

The anode material prepared in this Example includes a spherical carbon material and a silicon material located among the carbon materials. The carbon material includes a carbon shell layer, a cavity is formed by the surrounding of the carbon shell layer, and the carbon shell layer has pores. The carbon shell layer includes a plurality of layers of graphitized carbon material configured to be stacked along a radial direction of the carbon material. The number of layers of the graphitized carbon material in the carbon shell layer, the thickness of the carbon shell layer, the average inner diameter of the cavity, the average pore diameter of the pore and the porosity and thickness of the anode material are shown in Table 1.

### Example 2

The difference of this Example from Example 1 lies in that: Co (NO₃) ₂ 6H₂O used in step (1) was replaced with Cu(NO₃)₂.

The anode material prepared in this Example includes a carbon material and a silicon material located among the carbon materials. The carbon material includes a carbon shell layer, a cavity is formed by the surrounding of the carbon shell layer, and the carbon shell layer has pores. The carbon shell layer includes a graphitized carbon material which is in layered structure, the layered structure of the graphitized carbon material is stacked along the radial direction of the carbon material. The number of layers of the graphitized carbon material in the carbon shell layer, the thickness of the carbon shell layer, the average inner diameter of the cavity, the average pore diameter of the pore and the porosity and thickness of the anode material are shown in Table 1.

### Example 3

The difference of this Example from Example 1 lies in that: Co (NO₃) ₂ 6H₂O used in step (1) was replaced with Fe(NO₃)₃.

The anode material prepared in this Example includes a carbon material and a silicon material located among the carbon materials. The carbon material includes a carbon shell layer, a cavity is formed by the surrounding of the carbon shell layer, and the carbon shell layer has pores. The carbon shell layer includes a graphitized carbon material which is in layered structure, the layered structure of the graphitized carbon material is stacked along the radial direction of the carbon material. The number of layers of the graphitized carbon material in the carbon shell layer, the thickness of the carbon shell layer, the average inner diameter of the cavity, the average pore diameter of the pore and the porosity and thickness of the anode material are shown in Table 1.

### Example 4

The difference of this Example from Example 1 lies in that: Co (NO₃) ₂ 6H₂O used in step (1) was replaced with NiCl₂.

The anode material prepared in this Example includes a carbon material and a silicon material located among the carbon materials. The carbon material includes a carbon shell layer, a cavity is formed by the surrounding of the carbon shell layer, and the carbon shell layer has pores. The carbon shell layer includes a graphitized carbon material which is in layered structure, the layered structure of the graphitized carbon material is stacked along the radial direction of the carbon material. The number of graphene layer in the carbon shell layer, the thickness of the carbon shell layer, the average inner diameter of the cavity, the average pore diameter of the pore and the porosity and thickness of the anode material are shown in Table 1.

### Example 5

The difference of steps of this Example from that of Example 1 lies in that step (1) and step (4) was not conducted in this Example. Specifically, 1g of silicon dioxide, 0.43g of cobalt metal nanoparticles and 800ml of methanol were mixed, and then the mixture was ultrasonicated for 4 hours under an ultrasonic power of 40W, dried to obtain a silicon dioxide loaded with cobalt nanoparticles, which was expressed as SiO₂-CoNPs Powder. Subsequently, the obtained SiO₂-CoNPs was subjected to the steps (3) to (5) in Example 1.

The anode material prepared in this Example includes a carbon material and a silicon material located among the carbon materials. The carbon material includes a carbon shell layer, a cavity is formed by the surrounding of the carbon shell layer, and the carbon shell layer has pores. The carbon shell layer includes a graphitized carbon material which is in layered structure, the layered structure of the graphitized carbon material is stacked along the radial direction of the carbon material. The number of graphene layer in the carbon shell layer, the thickness of the carbon shell layer, the average inner diameter of the cavity, the average pore diameter of the pore and the porosity and thickness of the anode material are shown in Table 1.

### Example 6

(1) 1 g of SiO₂, and then 2.10 g of Co (NO₃) ₂ 6H₂O and 20mg of phenylalanine (phe) were added to 800mL of methanol sequentially to obtain a mixed solution, and then the mixed solution was ultrasonicated for 4 hours under an ultrasonic power of 40W. Subsequently, the mixed solution after ultrasonic treatment was evaporated and dried for 12 hours to obtain a bulk solid. Finally, the bulk solid was ground into powder to obtain a silicon dioxide loaded with catalyst Co²⁺ and solid carbon source-phe, which was expressed as SiO₂@Co-Phe.
(2) The SiO₂@Co-Phe powder obtained in step (1) was put into a CVD tube furnace, heated to 800°C at a heating rate of 1200°C/h under an H₂ atmosphere with a flow rate of 90sccm, and then heat-preserved for 20min, so that SiO₂@Co was reduced and a silicon dioxide loaded with cobalt nanoparticles (which was expressed as SiO2-CoNPs Powder) was formed (the solid carbon source-Phe has begun to crack during this process).
(3) The flow rate of H₂ was adjusted to 10sccm under the high temperature condition of 800°C, and the cracking of the Phe was continued. The H₂ was turned off 10 minutes later. Ar was then fed and the temperature in the furnace was cool down to room temperature to obtain a silicon dioxide loaded with multi-layer graphite encapsulated cobalt nanoparticles, which was expressed as SiO₂-Co@GNPs Powder.
(4) The SiO₂-Co@GNPs Powder was put into a mixed acid solution of 1mol/L sulfuric acid and 1mol/L nitric acid, etched for 8h, centrifuged to obtain a silicon dioxide loaded with porous hollow graphite, which was expressed as SiO₂-MGNPs precipitate. The SiO₂-MGNPs precipitate was washed with water for several times and dried for 8h to obtain a SiO₂-MGNPs Powder.
(5) The SiO₂-MGNPs Powder was mixed with magnesium powder in a mass ratio of 1.5: 1, and the obtained mixture was placed into a high-temperature tube furnace to perform a high-temperature reduction reaction for 2h in an Ar atmosphere at 650°C, then cooling to room temperature. Afterwards, ammonia was fed for 1 hour before being turned off, then Ar was fed for 0.5 hour before being turned off, and the obtained mixed powder was taken out. Finally, an acid-washing was conducted to the mixed powder for 2 hours with 1mol/L hydrochloric acid, the obtained mixture was then centrifuged, washed with water, and freeze-dried to obtain Si-MGNPs powder.

The anode material prepared in this Example includes a carbon material and a silicon material located among the carbon materials. The carbon material includes a carbon shell layer, a cavity is formed by the surrounding of the carbon shell layer, and the carbon shell layer has pores. The carbon shell layer includes a graphitized carbon material which is in layered structure, the layered structure of the graphitized carbon material is stacked along the radial direction of the carbon material. The number of graphene layer in the carbon shell layer, the thickness of the carbon shell layer, the average inner diameter of the cavity, the average pore diameter of the pore and the porosity and thickness of the anode material are shown in Table 1.

### Example 7

The difference of this Example from Example 1 lies in that: the inlet flow rate of methane is 8 sccm, and the heat-preserved time for introducing methane is 5min.

The anode material prepared in this Example includes a carbon material and a silicon material located among the carbon materials. The carbon material includes a carbon shell layer, a cavity is formed by the surrounding of the carbon shell layer, and the carbon shell layer has pores. The carbon shell layer includes layers of graphene which are stacked along the radial direction of the carbon material. The number of graphene layer in the carbon shell layer, the thickness of the carbon shell layer, the average inner diameter of the cavity, the average pore diameter of the pore and the porosity and thickness of the anode material are shown in Table 1.

### Example 8

The difference of this Example from Example 1 lies in that: the inlet flow rate of methane is 10 sccm, and the heat-preserved time for introducing methane is 30 min.

The anode material prepared in this Example includes a carbon material and a silicon material located among the carbon materials. The carbon material includes a carbon shell layer, the carbon shell layer has a cavity, and the carbon shell layer has pores. The carbon shell layer includes a graphitized carbon material which is in layered structure, the layered structure of the graphitized carbon material is stacked along the radial direction of the carbon material. The number of graphene layer in the carbon shell layer, the thickness of the carbon shell layer, the average inner diameter of the cavity, the average pore diameter of the pore and the porosity and thickness of the anode material are shown in Table 1.

### Example 9

The difference of this Example from Example 1 lies in that: the inlet flow rate of methane is 50 sccm, and the heat-preserved time for introducing methane is 20 min.

The anode material prepared in this Example includes a carbon material and a silicon material located among the carbon materials. The carbon material includes a carbon shell layer, the carbon shell layer has a cavity, and the carbon shell layer has pores. The carbon shell layer includes a graphitized carbon material which is in layered structure, the layered structure of the graphitized carbon material is stacked along the radial direction of the carbon material. The number of graphene layer in the carbon shell layer, the thickness of the carbon shell layer, the average inner diameter of the cavity, the average pore diameter of the pore and the porosity and thickness of the anode material are shown in Table 1.

### Example 10

The difference of this Example from Example 1 lies in that: the inlet flow rate of methane is 250 sccm, and the heat-preserved time for introducing methane is 1 min.

The anode material prepared in this Example includes a carbon material and a silicon material located among the carbon materials. The carbon material includes a carbon shell layer, the carbon shell layer has a cavity, and the carbon shell layer has pores. The carbon shell layer includes a graphitized carbon material which is in layered structure, the layered structure of the graphitized carbon material is stacked along the radial direction of the carbon material. The number of graphene layer in the carbon shell layer, the thickness of the carbon shell layer, the average inner diameter of the cavity, the average pore diameter of the pore and the porosity and thickness of the anode material are shown in Table 1.

### Example 11

The difference of this Example from Example 1 lies in that: the inlet flow rate of methane is 300 sccm, and the heat-preserved time for introducing methane is 10 min.

The anode material prepared in this Example includes a carbon material and a silicon material located among the carbon materials. The carbon material includes a carbon shell layer, the carbon shell layer has a cavity, and the carbon shell layer has pores. The carbon shell layer includes a graphitized carbon material which is in layered structure, the layered structure of the graphitized carbon material is stacked along the radial direction of the carbon material. The number of graphene layer in the carbon shell layer, the thickness of the carbon shell layer, the average inner diameter of the cavity, the average pore diameter of the pore and the porosity and thickness of the anode material are shown in Table 1.

### Comparative Example 1

1 g of SiO₂, and 0.5g of asphalt were mixed uniformly to obtain a mixed powder, and then the mixed powder was put into a high-temperature box furnace, heated to 800°C at a heating rate of 1200°C/h under an N₂ atmosphere, and then heat-preserved for 10min to allow carbonization, finally a carbon-encapsulated silicon dioxide (which was expressed as SiO₂-C powder) was formed.
(2) The SiO₂-C powder was put into a mixed acid solution of 1mol/L sulfuric acid and 1mol/L nitric acid, etched for 8h, centrifuged to obtain a porous carbon-encapsulated silicon dioxide, which was expressed as SiO₂-MGNPs precipitate. The SiO₂-MGNPs precipitate was then placed in 20wt% HF to etch the silicon dioxide for 8h, and finally the porous carbon material (which was expressed as MCNPs powder) was obtained.
(3) The MGNPs Powder, SiO₂ and magnesium powder were mixed in a mass ratio of 1: 2:2, and the obtained mixture was placed into a high-temperature tube furnace to perform a high-temperature reduction reaction for 2h in an N₂ atmosphere at 650°C, then cooling to room temperature. Afterwards, ammonia was fed for 1 hour before being turned off, then N₂ was fed for 0.5 hour before being turned off, and the obtained mixed powder was taken out. Finally, an acid-washing was conducted to the mixed powder for 2 hours with 1mol/L hydrochloric acid, the obtained mixture was then centrifuged, washed with water, and freeze-dried to obtain Si-MGNPs powder.

The anode material prepared in this Comparative Example includes a carbon material and a silicon material located among the carbon materials. The carbon material includes a carbon shell layer, the carbon shell layer has a cavity, and the carbon shell layer has pores. The carbon shell layer is amorphous carbon. The thickness of the carbon shell layer, the average inner diameter of the cavity, the average pore diameter of the pore and the porosity and thickness of the anode material are shown in Table 1.

### Comparative Example 2

The difference of this Comparative Example from Example 1 lies in that: the mixed acid solution of 1mol/L sulfuric acid and 1mol/L nitric acid used in step (4) was replaced with HF.

The anode material prepared in this Comparative Example includes graphite particles and a silicon material located between the graphite particles. The graphite particles include a solid metal core and a graphite shell layer located on the surface of the solid metal core. The test parameters of the anode material are shown in Table 1.

### Performance testing

(1) The pore volume of the cavity and the pore was measured by using the BET test for measuring pore distribution, and the porosities of the carbon material and the anode material were calculated accordingly.
(2) Before the silicon material in the anode material is etched, the mass of the anode material is measured and expressed as Mi. After the silicon material in the anode material is etched with HF, the mass of the anode material is measured again and expressed as M₂. The mass ratio of the silicon material to the anode material is calculated according the formula of (M₂-M₁)/M₂.
(3) The number of graphene layer in the carbon shell, the thickness of the carbon shell layer and the distance between adjacent carbon materials were tested by high-resolution transmission electron microscopy.
(4) The degree of sphericity and median particle size of the carbon material were tested by laser particle size analyzer after etching the silicon material in the anode material with HF.
(5) The elastic modulus and tensile strength of the carbon material were tested by Nano Indentor after etching the silicon material in the anode material with HF.
(6) The π-π stacking van der Waals force between carbon materials was measured by a dual-polarization interferometry.
(7) Test method for the average inner diameter of the cavity: the average value of the pore diameter of 200 cavities in the carbon material shown by transmission electron microscope was calculated by mathematical statistics.
(8) Test method for the average pore size of the pores: etching the silicon material in the anode material before testing the average pore size using Micromeritics ASAP 2460, a fully automatic specific surface and porosity analyzer from US. The gas used in this test was CO₂.
(9) Test method of median particle size of the silicon material: the diameter of the silicon material shown by transmission electron microscope was calculated by mathematical statistics.
(10) The electrochemical performance of the anode material was tested as follows:

Slurries (with a solid content of 50%) were prepared by mixing the anode material, a conductive agent and a binder into a solvent in a mass ratio of 94:1:5, and were uniformly coated on copper foil current collector and dried in vacuum to obtain anode plates. Subsequently, the anode plates, ternary positive electrode plates prepared by traditional mature process, 1mol/L LiPF6/ ethylene carbonate+dimethyl carbonate+methyl ethyl carbonate (V/V = 1: 1: 1) electrolyte, Celgard2400 diaphragm and a battery shell were assembled into 18650 cylindrical cell. The charge-discharge test was performed on the LAND battery test system with conditions that: charging and discharging current: 0.2 C constant current at room temperature, and charging and discharging voltage: 2.75 to 4.2V. The results are shown in Table 1 and Table 2.

**Table 1: Results I for the performance parameters of the anode material prepared in each Example and Comparative Example**

| Sample | Me dian particle size of the carbon material (nm) | Me dian particle size of the silicon material (nm) | N umber of graphe ne layer in the carbon shell | T hickne ss of the carbon shell layer (nm ) | *I*_{G}/*I* _{D} of the anode material | Ave rage inner diameter of the cavity (nm) | Avera ge pore size of the pores (nm) | Ma ximum distance between adjacent carbon material s (nm) | Degr ee of sphericity of the carbon material | π-π stacking van der Waals force between adjacent carbon materials (kJ/mol) |
|---|---|---|---|---|---|---|---|---|---|---|
| Example 1 | 29 | 1.3 | 13 | 4.4 | 1.3 | 20 | 1.8 | 15 | 0.92 | 34 |
| Example 2 | 170 | 5.2 | 6 | 2.1 | 1.2 | 165 | 1.5 | 32 | 0.90 | 5 |
| Example 3 | 35 | 1.5 | 15 | 5.1 | 1.5 | 25 | 2 | 18 | 0.91 | 36 |
| Example 4 | 7 | 0.5 | 4 | 1.4 | 1.3 | 18 | 1.6 | 3 | 0.94 | 25 |
| Example 5 | 32 | 1.4 | 11 | 3.7 | 1.2 | 25 | 0.45 | 17 | 0.88 | 42 |
| Example 6 | 34 | 1.4 | 15 | 5.1 | 0.8 | 24 | 2 | 18 | 0.68 | 46 |
| Example 7 | 22 | 1.2 | 4 | 1.4 | 1.2 | 20 | 1.8 | 12 | 0.90 | 3.5 |
| Example 8 | 24 | 1.2 | 5 | 1.7 | 1.2 | 20 | 0.8 | 12 | 0.91 | 42 |
| Example 9 | 27 | 1.3 | 10 | 3.4 | 1.3 | 20 | 1.7 | 15 | 0.93 | 45 |
| Example 10 | 23 | 1.2 | 4 | 1.4 | 1.2 | 20 | 1.9 | 12 | 0.93 | 38 |
| Example 11 | 52 | 2.1 | 18 | 6.2 | 1.2 | 20 | 1.8 | 28 | 0.92 | 12 |
| Comparative Example 1 | 45 | 1.8 | 0 (amo rphous carbon ) | 7 | 0.4 | 30 | 4 | 48 | 0.75 | 0.8 |
| Comparative Example 2 | 29 | 1.3 | 13 | 4.4 | 1.3 | 0 | 0 | 15 | 0.92 | 41 |

**Table 2: Results II for the performance parameters of the anode material prepared in each Example and Comparative Example**

| Sampl e | Elastic modulus of the carbon material (TPa) | Tensile strength of the carbon material (GPa) | Porosity of the carbon material (%) | Porosity of anode material (%) | Mass ratio of the silicon material in the anode material (%) | Specific capacity of the anode material (Ah/Kg) | Volumetric expansion rate of the anode material | Number of stable cycles of the anode material (80%) |
|---|---|---|---|---|---|---|---|---|
| Example 1 | 0.71 | 110 | 80 | 48 | 22.4 | 810.5 | 15.3 | 1500 |
| Example 2 | 0.66 | 85 | 90 | 52 | 23.5 | 817.3 | 15.6 | 1500 |
| Example 3 | 0.72 | 94 | 82 | 46 | 24.2 | 880.6 | 16.1 | 1300 |
| Example 4 | 0.70 | 91 | 32 | 15 | 21.8 | 788.6 | 17.2 | 1500 |
| Example 5 | 0.66 | 88 | 81 | 47 | 22.6 | 818.2 | 15.5 | 1300 |
| Example 6 | 0.64 | 85 | 83 | 45 | 24.6 | 892.1 | 18 | 1200 |
| Example 7 | 0.48 | 50 | 83 | 46 | 30.2 | 960.2 | 35.2 | 1000 |
| Example 8 | 0.52 | 62 | 82 | 46 | 28.3 | 935.2 | 24.9 | 1100 |
| Example 9 | 0.67 | 86 | 81 | 47 | 24.9 | 825.1 | 19.3 | 1200 |
| Example 10 | 0.42 | 40 | 83 | 46 | 32.1 | 965.4 | 30.2 | 1000 |
| Example 11 | 0.88 | 116 | 73 | 53 | 20.1 | 740.5 | 36.1 | 900 |
| Comparativ e Example 1 | 0.51 | 46 | 82 | 48 | 24.3 | 889.8 | 42.2 | 800 |
| Comparativ e Example | 1.57 | 141 | / | 48 | 5.3 | 180.2 | 3.4 | 1500 |
| 2 | | | | | | | | |

As shown in Table 1 and Table 2, the methods as shown in Examples 1-11 of the present disclosure provide a carbon material with larger pore volume and high lithium intercalation capacity, and improves the anti-expansion performance of the carbon material by firstly catalyzing the carbon source with the metal catalyst particles to allow a carbon shell layer 12 to be grown under the condition of the first heat treatment, and secondly performing etching to form a cavity 11 inside the carbon shell layer 12 and pores 13 in the carbon shell layer 12. Finally, the method of the present disclosure reduces the silicon oxide raw material to silicon material directly without etching the silicon oxide raw material, by which the waste of the silicon oxide raw material is reduced and the capacity of the anode material is improved.

As shown in Example 1 and Examples 7-11 of the present disclosure, the thickness of the generated carbon shell layer 12 (i.e., the number of graphene layer in the carbon shell 12) is controlled by adjusting the inlet flow rate of the gas-phase carbon source and the heat-preserved time of the first heat treatment in step (3). As shown in Example 7, when the inlet flow rate of the gas-phase carbon source is small, the thickness of carbon shell layer 12 will be thin, which will reduce the tensile strength of the carbon material 1, and finally decrease the cycle performance and anti-expansion performance of anode material 10. As shown in Example 11, when the inlet flow rate of the gas-phase carbon source is too large, the thickness of carbon shell layer 12 will be thick, which will increase the tensile strength of the carbon material 1, but reduce flexibility, and the gaps among the carbon materials 1 will be reduced, which will decrease the amount of the silicon material 2, and finally decrease the capacity of the anode material 10.

In Comparative Example 1, no catalyst metal particles were added during the preparation of the anode material, resulting in an amorphous carbon material without continuous graphite lattice structure, which would lead to poor mechanical properties of the prepared anode material, and further lead to poor anti-expansion performance and cycle stability.

In Comparative Example 2, HF was used during the etching. However, no cavities and pores were generated in the carbon material due to the isolating effect of the carbon shell layer on HF, and the content of the silicon material in the material is reduced because of HF etching, which leads to poor specific capacity of the material. Although the lack of cavities and pores will increase the volumetric expansion of the material, the volumetric expansion is still relatively small since the amount of the silicon material in the anode material obtained in this Comparative Example is very small.

The above are merely preferred embodiments of the present disclosure, which are not used to limit the present disclosure, and various modifications and changes can be made to the present application for those skilled in the art. Any modifications, equivalent substitutions, improvements, and the like within the spirit and principles of the present application shall fall into the protection scope of the present disclosure.

## Claims

1. An anode material, comprising a carbon material, wherein
the carbon material comprises a carbon shell layer, a cavity is located inside the carbon material, and the carbon shell layer encloses to form the cavity, and the carbon shell layer has pores, and at least part of the pores runs through the carbon shell layer.

2. The anode material according to claim 1, wherein the carbon material is spherical, and the carbon shell layer comprises a graphitized carbon material, the graphitized carbon material has a layered structure configured to be stacked along a radial direction of the carbon material.

3. The anode material according to claim 1 or 2, further comprising a silicon material distributed in the carbon material.

4. The anode material according to claim 3, wherein at least part of the silicon material is located among carbon shell layers.

5. The anode material according to claim 3, wherein at least part of the silicon material is located in the cavity and/or the pores.

6. The anode material according to claim 1, further comprising at least one of the following features (1) to (13):
(1) layered graphite is arranged among the carbon materials;
(2) at least part of the pores runs through the carbon shell layer;
(3) a median particle size of the carbon material is 5nm to 200nm;
(4) the number of layers of the graphitized carbon material in the carbon shell layer is smaller than 20,
(5) a thickness of the carbon shell layer is 1.2 nm to 5.2 nm;
(6) Raman spectrogram of the anode material obtained by Raman spectroscopy using a measuring light source with a wavelength of 532nm shows that, a D band is observed between 1300cm⁻¹ and 1400 cm ⁻¹ and a G band is observed between 1500 cm ⁻¹ and 1600 cm ⁻¹, and a ratio I_{G}/I_{D} between the peak intensity I_{D} of the D band and the peak intensity I_{G} of the G band is greater than 0.5;
(7) an average inner diameter of the cavity is 3.8nm to 198.8nm;
(8) an average pore diameter of the pore is 0.42nm to 2 nm;
(9) a distance between adjacent carbon materials is 0 nm to 40 nm;
(10) a degree of sphericity of the carbon material is 0.6 to 1.0;
(11) a mass ratio of the silicon material to the anode material is 5% to 80%;
(12) a median particle size of the silicon material is 1 nm to 15 nm; and
(13) the silicon material comprises at least one of crystalline silicon and amorphous silicon.

7. The anode material according to claim 1, further comprising at least one of the following features (1) to (5):
(1) an elastic modulus of the carbon material is 0.1 TPa to 0.8 TPa;
(2) a tensile strength of the carbon material is 15 GPa to 110 GPa;
(3) a porosity of the carbon material is 65% to 96%;
(4) a porosity of the anode material is 7% to 50%; and
(5) a π -π stacking van der Waals force between adjacent carbon materials is 1 kJ/mol to 50 kJ/mol.

8. A method for preparing an anode material, comprising following steps:
performing a first heat treatment to a mixture containing a silicon oxide raw material loaded with metal catalyst particles and a carbon source, catalyzing the carbon source to graphitize, and obtaining a first precursor;
etching the first precursor to obtain a second precursor, wherein the etching agent for the etching is an oxidizing acid; and
reducing at least part of the silicon oxide raw material in the second precursor to a silicon material to obtain the anode material.

9. The method according to claim 8, wherein the silicon oxide raw material loaded with metal catalyst particles is prepared by:
performing a second heat treatment to a mixture containing the silicon oxide raw material and a metal salt catalyst under a reducing atmosphere to obtain the silicon oxide raw material loaded with metal catalyst particles.

10. The method according to claim 9, comprising at least one of the following features (1) to (14):
(1) the silicon oxide raw material comprises at least one of silicon dioxide and silicon monoxide;
(2) a median particle size of the silicon oxide raw material is 5nm to 200nm
(3) the metal salt catalyst comprises at least one of Fe³⁺, Co²⁺, Ni²⁺, Cu²⁺ and Au³⁺;
(4) the metal salt catalyst comprises at least one of Fe(NO₃)₃, FeCl₃, Co(NO3)₂, CoCl₂, Ni(NO₃)₂, NiCl₂, Cu(NO₃)₂, CuCh and HAuCl₄;
(5) a mass ratio of the silicon oxide raw material to the metal salt catalyst is 1: (0.08 to 5.00);
(6) the mixture containing the silicon oxide raw material and a metal salt catalyst further comprises a solvent;
(7) the mixture containing the silicon oxide raw material and a metal salt catalyst further comprises a solvent, the solvent comprises at least one of methanol, ethanol, propanol and water;
(8) the mixture containing the silicon oxide raw material and a metal salt catalyst further comprises a solvent, the addition amount of the solvent is 50-1000 times of the total mass of the silicon oxide raw material and the metal salt catalyst;
(9) before performing a second heat treatment to a mixture containing the silicon oxide raw material and a metal salt catalyst, the method further comprises steps of drying and grinding the mixture;
(10) the reducing atmosphere comprises at least one of hydrogen and ammonia;
(11) an inlet flow rate of the reducing gas atmosphere is 10 sccm to 150 sccm;
(12) a temperature for the second heat treatment is 400°C to 1000°C;
(13) a heat-preserved time of the second heat treatment is 5 min to 30 min; and
(14) a heating rate of the second heat treatment is 100°C/h to 1200°C/h.

11. The method according to claim 8, comprising at least one of the following features (1) to (9):
(1) the carbon source comprises a gas-phase carbon source and a solid-phase carbon source;
(2) the carbon source comprises a gas-phase carbon source and a solid-phase carbon source, the gas-phase carbon source comprises at least one of methane, ethane and acetylene;
(3) the carbon source comprises a gas-phase carbon source and a solid-phase carbon source, the solid-phase carbon source comprises at least one of asphalt, glucose, sucrose, cellulose, glycine, alanine and phenylalanine
(4) the carbon source comprises a gas-phase carbon source and a solid-phase carbon source, the mass ratio of the solid-phase carbon source to the metal catalyst particles is 1: (10-10000);
(5) the carbon source comprises a gas-phase carbon source and a solid-phase carbon source, the inlet flow rate of the gas-phase carbon source is 10 sccm to 250 sccm;
(6) a temperature for the first heat treatment is 600°C to 1000°C;
(7) a heat-preserved time of the first heat treatment is 1min to 30min;
(8) before performing a first heat treatment to a mixture containing a silicon oxide raw material loaded with metal catalyst particles and a carbon source, the method further comprises:
introducing hydrogen into the mixture containing the silicon oxide raw material loaded with metal catalyst particles and the carbon source; and
(9) before performing a first heat treatment to a mixture containing a silicon oxide raw material loaded with metal catalyst particles and a carbon source, the method further comprises: introducing hydrogen into the mixture containing the silicon oxide raw material loaded with metal catalyst particles and the carbon source, the inlet flow rate of hydrogen is 10 sccm to 90 sccm.

12. The method according to claim 8, comprising at least one of the following features (1) to (6):
(1) the oxidizing acid comprises at least one of sulfuric acid, nitric acid and hydrogen peroxide;
(2) the oxidizing acid comprises the mixed acid of sulfuric acid and nitric acid;
(3) the oxidizing acid comprises the mixed acid of sulfuric acid and nitric acid, the concentration of sulfuric acid in the mixed acid is 0.1 mol/L to 4mol/L
(4) the oxidizing acid comprises the mixed acid of sulfuric acid and nitric acid, the concentration of nitric acid in the mixed acid is 0.1mol/L to 4mol/L;
(5) a duration for the etching is 2 h to 24 h; and
(6) before reducing at least part of the silicon oxide raw material in the second precursor to silicon material, the method further comprises that: performing a solid-liquid separation on the second precursor to obtain a solid following by a first water-washing and a first drying.

13. The method according to claim 8, wherein reducing at least part of the silicon oxide raw material in the second precursor to silicon material comprises that: mixing the second precursor with a reducing agent and then conducting a third heat treatment, wherein the method comprises at least one of the following features (1) to (9):
(1) the reducing agent comprise at least one of magnesium and aluminum;
(2) a mass ratio of the second precursor to the reducing agent is (1.25 to 2.00): 1;
(3) a third heat treatment is performed in an inert gas atmosphere;
(4) the third heat treatment is performed in an inert gas atmosphere, the inert gas comprises at least one of nitrogen and argon;
(5) a temperature for the third heat treatment is 600°C to 800°C;
(6) a heat-preserved time of the third heat treatment is 0.5 h to 5h;
(7) after conducting a third heat treatment on the second precursor and the reducing agent, the method further comprises: inerting the material obtained from the third heat treatment;
(8) after conducting a third heat treatment on the second precursor and the reducing agent, the method further comprises: inerting the material obtained from the third heat treatment, the gas used for the inerting comprises ammonia; and
(9) after conducting a third heat treatment on the second precursor and the reducing agent, the method further comprises: inerting the material obtained from the third heat treatment, and conducting acid-washing, a second water-washing and a second drying on the material obtained from the inerting.

14. A lithium-ion battery, comprising the anode material according to any one of claims 1-7 or the anode material prepared by the method according to any one of claims 8-13.
